Europäisches Patentamt

European Patent Office

Office européen des brevets

(19)

(11) Veröffentlichungsnummer: **0 315 772**
**B1**

(12)

## EUROPÄISCHE PATENTSCHRIFT

(45) Veröffentlichungstag der Patentschrift: **23.01.91**

(51) Int. Cl.⁵: **B 62 D 7/20**

(21) Anmeldenummer: **88116372.9**

(22) Anmeldetag: **04.10.88**

(54) Verbindung eines Kugelgelenkschaftes mit einem Rohr.

(30) Priorität: **12.11.87 DE 3738432**

(43) Veröffentlichungstag der Anmeldung:
**17.05.89 Patentblatt 89/20**

(45) Bekanntmachung des Hinweises auf die
Patenterteilung:
**23.01.91 Patentblatt 91/04**

(84) Benannte Vertragsstaaten:
**DE FR GB IT**

(56) Entgegenhaltungen:
**EP-A-0 222 502**
**DE-U-8 602 266**
**FR-A-2 171 721**
**GB-A- 733 343**
**GB-A- 764 881**
**US-A-2 340 300**
**US-A-4 657 424**

(73) Patentinhaber: **TRW Ehrenreich GmbH & Co. KG**
**Hansa-Allee 190**
**D-4000 Düsseldorf 11 (DE)**

(72) Erfinder: **Broszat, Lothar**
**Sperberstrasse 21**
**D-4019 Monheim (DE)**
Erfinder: **Merklinger, Andreas**
**An der Andreaskirche 3**
**D-4150 Krefeld (DE)**
Erfinder: **Busse, Fritz**
**Ludwig-Richter-Weg 39**
**D-4010 Hilden (DE)**

(74) Vertreter: **Patentanwälte Dipl.-Ing. Alex Stenger**
**Dipl.-Ing. Wolfram Watzke Dipl.-Ing. Heinz J.**
**Ring**
**Kaiser-Friedrich-Ring 70**
**D-4000 Düsseldorf 11 (DE)**

Courier Press, Leamington Spa, England.

EP 0 315 772 B1

**Beschreibung**

Gegenstand der Erfindung ist die Verbindung eines Kugelgelenkschaftes mit einem Rohr, insbesondere für Spur- und Lenkstangen von Kraftfahrzeugen, wobei der mit einem Außengewinde versehene Kugelgelenkschaft in ein Innegewinde des Rohres eingeschraubt ist und mittels einer im Bereich des Innengewindes in Umfangsrichtung des Rohres wirkenden Spanneinrichtung gesichert ist, die zwei radiale Auskragungen des Rohres aufweist, in die mindestens eine Schraube zum Verspannen der Auskragungen eingesetzt ist. Eine solche Gewindeverbindung ist aus der GB—A—764881 bekannt.

Aus dem Handbuch von J. Reimpell, Fahrwerktechnik 1, Vogel-Buchverlag, Würzburg ist gemäß Seite 271 eine Verbindung zwischen Rohr mit Innengewinde und Gewindeschaft eines Kugelgelenkes bekannt, bei der das Rohr geschlitzt ist und mit einer aufgeschobenen Schelle verspannt wird. Zum Verspannen weist die Schelle abgewinkelte Spannflansche, die mittels hindurchgeführter Schrauben zusammenziehbar sind. Bei diesem Stand der Technik ist die Montage umständlich, insbesondere weil Schelle und Schraubenkopf festgehalten werden müssen, während die Schraubenmutter angezogen wird. Darüber hinaus sind Aufwand und Gewicht der bekannten Verbindung aufgrund der zusätzlichen Schelle relativ groß. Schließlich ist die Verbindung korrosionsanfällig, da Feuchtigkeit ungehindert in die Gewindebereiche gelangen kann.

Der GB—A—764 881 ist eine Gewindeverbindung eines Kugelgelenkschaftes mit einem Rohr entnehmbar, die durch Verspannen beidseitig eines Rohrschlites angeordneter Rohrflansche mittels Schrauben gesichert wird. Durch den Rohrschlitz können jedoch Verunreinigungen und Feuchtigkeit in den Gewindebereich eindringen und Schwergängigkeit sowie Korrosion verursachen. Außerdem ist das Anzugsmoment schwer dosierbar, weil die Flansche unbehindert zusammenziehbar sind, wodurch unmittelbar eine Umfangskraft auf den Kugelgelenkschaft ausgeübt wird. Hierbei können erhebliche Kräfte in den Flanschen auftreten und deren Abreißen bewirken. Da praktisch keine elastischen Verformungswege vorgesehen sind, müssen zusätzliche Sicherungsscheiben eingebaut werden. Schließlich mindert der Schlitz der Festigkeit der Verbindung, weil insbesondere im Bereich des Schlitzendes hohe Spannungsspitzen auftreten.

Davon ausgehend liegt der Erfindung die Aufgabe zugrunde, die Verbindung zwischen Kugelgelenkschaft und Rohr zu verbessern, insbesondere die Montage zu vereinfachen und eine einfache Abdichtung und eine Verbindung mit vielen verschiedenen Rohren zu ermöglichen.

Zur technischen Lösung dieser Aufgabe ist eine Verbindung vorgesehen, bei der die Auskragungen Seitenwände einer radial nach außen gerichteten, außen geschlossenen Falte des Rohres sind.

Bei einer erfindungsgemäßen Verbindung wird der in das Rohr geschraubte Kugelgelenkschaft gesichert, in dem das Rohr im Bereich der Falte in Umfangsrichtung zusammengezogen wird. Dies wird dadurch begünstigt, daß durch die Falte Platz für eine Verformung des Rohrmaterials geschaffen und der Widerstand gegen ein Zusammenziehen in Umfangsrichtung gemindert wird. Insofern übernimmt die Falte die Funktion der im Stand der Technik bekannten Auskragungen, zwischen denen jedoch ein durchgehender Rohrschlitz ausgebildet ist.

Demgegenüber weist die Erfindung jedoch von Vorteil auf, daß das Rohr auch im Bereich der Falte vollständig geschlossen ist. Somit sind die Gewinde von Kugelgelenkschaft und Rohr vor Korrosion weitestgehend geschützt. Außerdem ist die Montage der Verbindung erleichtert, da die Seitenwänder der außen geschlossenen Falte durch Verspannen der Schrauben nur allmählich durchgebogen werden, was einen sanften Anstieg der den Kugelgelenkschaft haltenden Umfangskraft bedingt. Das Anzugsmoment der Schrauben und die auf den Kugelgelenkschaft wirkende Umfangskraft sind somit sehr fein dosierbar und die Bauteile der Verbindung vor einer Überlastung durch zu hohe Spannkräfte geschützt. Darüber hinaus können die einheitlich gefertigten Rohre der Verbindung mit verschiedenen rohrförmigen Spur- oder Lenkstangen verbunden werden. Der vollständig geschlossene Rohrquerschnitt erleichtert nämlich beispielsweise eine Schweißverbindung mit einer Spuroder Lenkstange. Schließlich ist die erfindungsgemäße Verbindung festigkeitsmäßig besonders günstig, weil sie eine vollständig geschlossene, ungeschlitzte Rohrwand aufweist. Das Widerstandsmoment des Rohres ist deshalb besonders groß. Außerdem ist die am Schlitzende bekannter geschlitzter Rohre auftretende Kerbwirkung mit örtlichen Spannungsspitzen bei einer erfindungsgemäßen Verbindung nicht vorhanden, woraus sich eine weitere Steigerung der Festigkeit ergibt.

Bei einer Ausgestaltung der Erfindung ist vorgesehen, daß sich die Falte bis zu dem kugelgelenkschaftseitigen Ende des Rohres erstreckt. Hierdurch wird insbesondere die Verspannbarkeit der Seitenwände der Falte erleichtert. Ferner wird hierdurch die Abdichtung des Endes des Rohres und der offenen Stirnseite der Falte mit einer gemeinsamen Dichtung ermöglicht. Schließlich bietet diese Ausgestaltung auch fertigungstechnische Vorteile.

Bei einer weiteren Ausgestaltung bildet das Rohr als durchgehendes Profilrohr eine Spuroder Lenkstange. Hierbei werden besonders gute Festigkeitswerte erzielt. Ferner sind zur Abdichtung der Spur- oder Lenkstange lediglich zwei Dichtungen an den beiden Enden erforderlich. Schließlich kann die Spur- oder Lenkstange auf einfache Weise aus einem gezogenen Rohr hergestellt werden.

Bei einer weiteren Ausgestaltung sind Rohre mit einer angeformten Falte jeweils an die Enden eines Rohrmittelstückes stumpf angeschweißt, mit dem sie gemeinsam eine Spur- oder Lenkstange bilden. Diese Ausführungsform ist insbesondere gewichts- und materialsparend.

Bei einer weiteren Ausgestaltung sind die beiden Enden einer rohrförmigen Spur- oder Lenkstange jeweils als Rohr mit einer angeformten Falte geformt, wodurch insbesondere Schweißverbindungen eingespart werden. Wenn das unverformte Rohrmittelstück der Spur- oder Lenkstange einen Durchmesser aufweist, der gegenüber dem Durchmesser seiner als Rohre mit angeformten Falten ausgebildeten Enden vergrößert ist, wird die Verformungsarbeit minimiert und eine Spur- oder Lenkstange mit relativ gleichmäßigen Festigkeitswerten geschaffen.

Bei einer weiteren Ausgestaltung nimmt die radiale Ausdehnung jeder Falte zu dem kugelgelenkschaftseitigen Ende des jeweiligen Rohres hin zu. Auf diese Weise werden weitere Gewichtseinsparungen erzielt und wird das Herstellen der Rohre durch Tiefziehen vereinfacht. Ferner werden Dichtungen eingespart, da die Falten jeweils nur eine offene Stirnseite aufweisen.

Bei einer weiteren Ausgestaltung sind die endseitigen Innengewinde der Spur- oder Lenkstange als Rechts- und als Linksgewinde ausgebildet, so daß die Spur durch Verdrehen der Spur- oder Lenkstange eingestellt werden kann.

Bei einer weiteren Ausgestaltung sind die kugelgelenkschaftseitigen Enden jedes Rohres und die offenen Stirnseiten jeder Falte mittels vorgesetzter oder in Rohraufweitungen eingelassener Dichtungen abgedichtet, so daß eine Korrosion der Spur- oder Lenkstange im Betrieb vermieden und deren Nachstellbarkeit erleichtert wird. Hierbei ist es besonders vorteilhaft, wenn die Dichtungen jeweils mit Laschen in die Falten eingreifen und die eingesetzten Schrauben zum Sichern des Kugelgelenkschaftes durch Bohrungen der Laschen hindurchgeführt sind. Hierdurch werden nämlich einerseits die Dichtungen gesichert und andererseits auch die Durchtrittsöffnungen der Schrauben abgedichtet. Gleichzeitig wird auch ein gewisser Schutz der Schraubengewinde vor Korrosion erzielt.

Weitere Einzelheiten und Vorteile des Gegenstandes der Erfindung ergeben sich aus der nachfolgenden Beschreibung der zugehörigen Zeichnungen, die vier bevorzugte Ausführungsformen einer erfindungsgemäßen Verbindung zeigen. In den Zeichnungen zeigen:

Fig. 1 eine Verbindung mit als Spur- oder Lenkstange ausgebildetem durchgehenden Rohr in der Vorderansicht;

Fig. 2 dieselbe Verbindung in der linken Hälfte im Halbschnitt und in der rechten Hälfte in der Draufsicht;

Fig. 3 dieselbe Verbindung entlang der Linie III—III der Fig. 1 geschnitten;

Fig. 4 alternative Ausführungsform einer Abdichtung des Endes eines Rohres im Halbschnitt;

Fig. 5 Verbindung mit an ein Rohrmittelstück stumpf angeschweißten Rohren in der Vorderansicht;

Fig. 6 dieselbe Verbindung in der linken Hälfte im Halbschnitt und in der rechten Hälfte in der Draufsicht;

Fig. 7 dieselbe Verbindung entlang der Linie VII—VII der Fig. 5 geschnitten;

Fig. 8 Verbindung mit zu den kugelgelenkschaftseitigen Enden des Rohres hin zunehmender Ausdehnung der Falten in der Vorderansicht;

Fig. 9 Ende derselben Verbindung während der Herstellung;

Fig. 10 dieselbe Verbindung in der linken Hälfte im Halbschnitt und in der rechten Hälfte in der Draufsicht;

Fig. 11 dieselbe Verbindung entlang der Linie XI—XI der Fig. 8 geschnitten;

Fig. 12 Verbindung mit einem im Bereich des Rohrmittelstückes größeren Durchmesser als im Bereich der Enden in der Vorderansicht;

Fig. 13 dieselbe Verbindung in der linken Hälfte im Halbschnitt und in der rechten Hälfte in der Draufsicht;

Fig. 14 dieselbe Verbindung entlang der Linie XIV—XIV der Fig. 12 geschnitten;

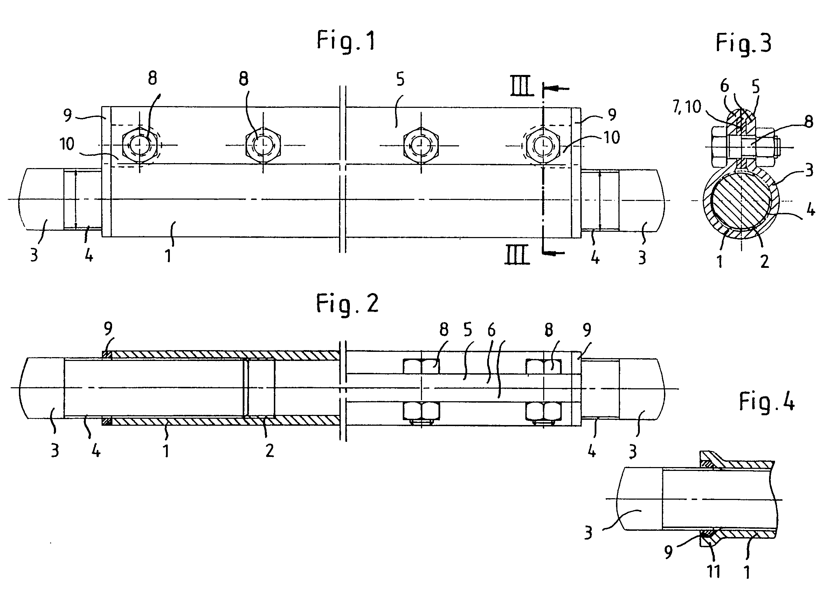

Bei der Verbindung gemäß Fig. 1 bis 3 bildet ein Rohr 1 ein durchgehendes Profilrohr einer Spur- oder Lenkstange. An den Enden weist das Rohr 1 Innengewinde 2 auf, in die Kugelgelenkschafte 3 mit Außengewinden 4 eingeschraubt sind.

An das Rohr 1 ist eine radial nach außen gerichtete Falte 5 angeformt, deren Seitenwände 6 einen Spalt 7 einschließen, der auch das Innengewinde 2 unterbricht. Die Seitenwände 6 sind mittels eingesetzter Schrauben 8 miteinander verspannbar. Hierbei wird das Rohr 1 an seinem Umfang zusammengezogen, so daß ein eingeschraubter Kugelgelenkschaft gesichert wird.

Die kugelzapfenseitigen Enden des Rohres 1 und die offenen Stirnseiten der Falte 5 sind mittels vorgesetzter Dichtungen 9 abgedichtet. Die Dichtungen 9 greifen mit Laschen 10 in die Spalte 7 der Falten 5 ein. Die Schrauben 8 sind durch Bohrungen der Laschen 10 geführt, so daß die Dichtungen 9 gehalten und auch die Schrauben 8 abgedichtet werden.

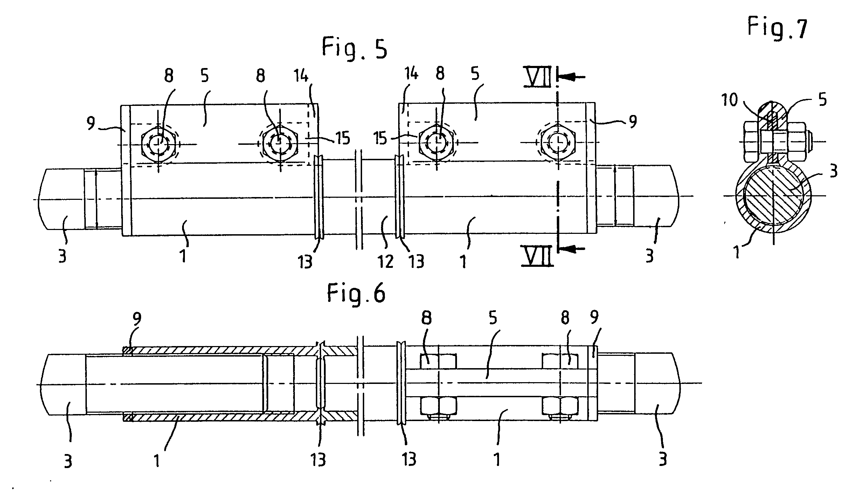

Wie in der Fig. 5 dargestellt, kann das Rohr 1 an den Enden auch mit Rohraufweitungen 11 versehen sein, die zur Aufnahme und Sicherung der zwischen Rohraufweitung 11 und Kugelgelenkschaft 3 gestopften Dichtung dienen. Es ist zweckmäßig, auch die stirnseitige Öffnung der Falte 5 mit einer Aufweitung zur Aufnahme der Dichtung 9 zu versehen.

Die Fig. 5 bis 7 zeigen eine weitere Verbindung in einer Spur- oder Lenkstange, bei der an ein Rohrmittelstück 12 kurze Rohre 1 mittels Reißschweißungen 13 stumpf angeschweißt sind. In die freien Enden der Rohre 1 sind wiederum Kugelgelenkschafte 3 eingeschraubt. Die Sicherung erfolgt wiederum durch Verspannen der Falte 5 mittels diese durchdringender Schrauben 8. Zur Abdichtung der Falte 5 sind nunmehr neben den kugelgelenkschaftseitigen Dichtungen 9 auch Dichtungen 14 an den einander zugewandten Stirnseiten der Falten 5 vorgesehen.

Diese Dichtungen 14 sind ebenfalls mit Laschen 15 versehen, die in das Innere der Falte eingreifen und von den Schrauben 8 durchdrungen werden.

Die Rohre 1 und die Falten 5 können an den Stirnseiten ebenfalls mit Aufweitungen entsprechend Fig. 4 zur Aufnahme der Dichtungen versehen sein.

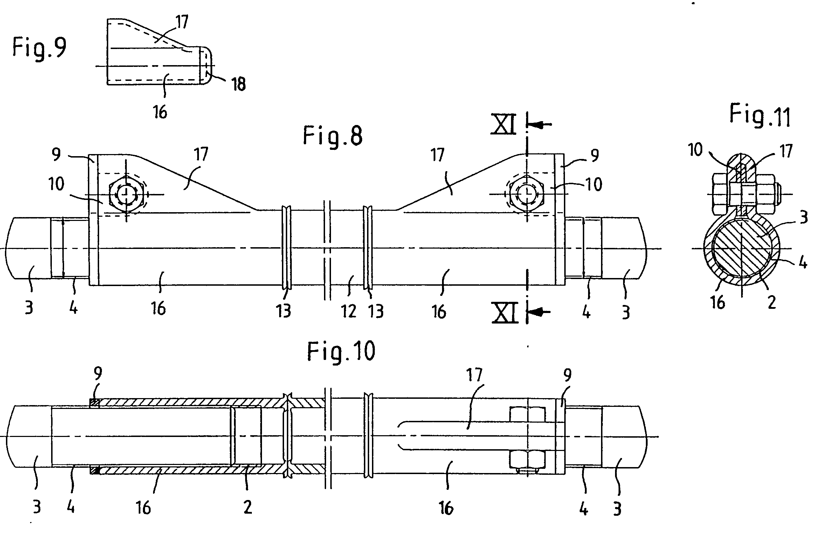

In den Fig. 8, 10 und 11 ist wiederum eine Spur- oder Lenkstange dargestellt, die von einem Rohrmittelstück 12 mit über Reibschweißungen 13 stumpf angeschweißten Rohren 16 gebildet wird. Die Rohre 16 nehmen in Innengewinden 2 Kugelgelenkschafte 3 mit Außengewinden 4 auf.

Die Rohre 16 weisen eine Falte 17 auf, deren radiale Ausdehnung ausgehend von dem zylindrischen Teil des Rohres 16 bis kurz vor dessen Ende hin zunimmt. Das Rohr 16 wird—wie in der Fig. 9 dargestellt—als Tiefziehteil hergestellt, dessen Kappe 18 nach dem Tiefziehen abgetrennt wird.

Durch Zusammenziehen der Seitenwände der Falte 17 werden auch bei dieser Verbindung die eingeschraubten Kugelgelenkschafte 3 gesichert. Zur Abdichtung sind wiederum Dichtungen 9 mit Laschen 10 vorgesehen. Diese Ausführungsform kommt jedoch mit zwei Dichtungen aus.

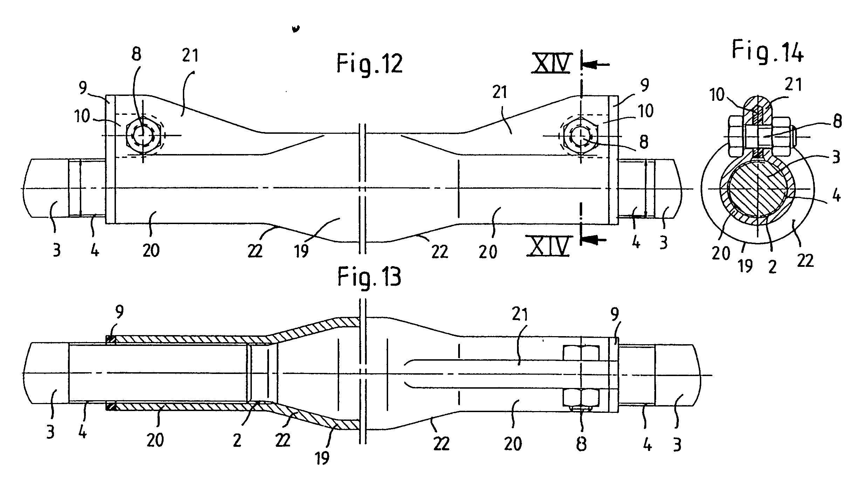

Die Spur- oder Lenkstange gemäß Fig. 12 bis 14 ist wiederum aus einem einzigen Rohrstück hergestellt. Sie weist ein Rohrmittelstück 19 auf, das einen Durchmesser hat, der gegenüber dem Durchmesser seiner als Rohre 20 mit angeformten Falten 21 ausgebildeten Enden hinausgeht. Zwischen dem Rohrmittelstück 19 und den Rohren 20 sind kontinuierliche Übergangsbereiche 22 vorgesehen.

Die Rohre 20 weisen wiederum Innengewinde 2 auf, in die Kugelgelenkschafte 3 mit Außengewinden 4 eingeschraubt sind. Die Kugelgelenkschafte 3 sind wiederum mittels die Falten 21 durchdringender und deren Seitenwände miteinander verspannender Schrauben 8 gesichert.

Zur Abdichtung der Gewindeverbindung sind schließlich die bereits weiter oben beschriebenen Dichtungen 9 mit Laschen 10 vorgesehen. Die Enden der Rohre und die Öffnungen der Falten können ebenfalls aufgeweitet sein.

Bei sämtlichen Spur- oder Lenkstangen werden für die Aufnahme der beiden Kugelgelenkschafte gegenläufige Innengewinde vorgesehen. Eine Nachstellung ist so durch einfaches Verdrehen der Spur- oder Lenkstange möglich.

Bezugszeichenliste

1 Rohr
2 Innengewinde
3 Kugelgelenkschaft
4 Außengewinde
5 Falte
6 Seitenwand
7 Spalt
8 Schraube
9 Dichtung
10 Lasche
11 Rohraufweitung
12 Rohrmittelstück
13 Reibschweißung
14 Dichtung
15 Lasche
16 Rohr
17 Falte
18 Kappe
19 Rohrmittelstück
20 Rohr
21 Falte
22 Übergangsbereich

**Patentansprüche**

1. Verbindung eines Kugelgelenkschaftes (3) mit einem Rohr (1, 16, 20), insbesondere für Spur- und Lenkstangen von Kraftfahrzeugen, wobei der mit einem Außengewinde (4) versehene Kugelgelenkschaft (3) in ein Innengewinde (2) des Rohres (1, 16, 20) eingeschraubt ist und mittels einer im Bereich des Innengewindes (2) in Umfangsrichtung des Rohres (1, 16, 20) wirkenden Spanneinrichtung gesichert ist, die zwei radiale Auskragungen des Rohres (1, 16, 20) aufweist, in die mindestens eine Schraube (8) zum Verspannen der Auskragungen eingesetzt ist, dadurch gekennzeichnet, daß die Auskragungen Seitenwände (6) einer radial nach außen gerichteten, außen geschlossenen Falte (5, 17, 21) des Rohres sind.

2. Verbindung nach Anspruch 1, dadurch gekennzeichnet, daß sich die Falte (5, 17, 21) bis zu dem kugelgelenkschaftseitigen Ende des Rohres (1, 16, 20) erstreckt.

3. Verbindung nach Anspruch 2, dadurch gekennzeichnet, daß das Rohr (1) als durchgehendes Profilrohr eine Spur- oder Lenkstange bildet.

4. Verbindung nach einem der Ansprüche 1 bis 2, dadurch gekennzeichnet, daß die Rohre (1, 16) mit einer angeformten Falte (5, 17) jeweils an die Enden eines Rohrmittelstückes (12) stumpf angeschweißt sind, mit dem sie gemeinsam eine Spur- oder Lenkstange bilden.

5. Verbindung nach einem der Ansprüche 1 bis 2, dadurch gekennzeichnet, daß die Enden einer rohrförmigen Spur- oder Lenkstange jeweils als Rohr (20) mit einer angeformten Falte (21) geformt sind.

6. Verbindung nach Anspruch 5, dadurch gekennzeichnet, daß ein unverformtes Rohrmittelstück (19) der Spur- oder Lenkstange einen Durchmesser aufweist, der gegenüber dem Durchmesser seiner als Rohre (20) mit angeformten Falten (21) ausgebildeten Enden vergrößert ist.

7. Verbindung nach einem der Ansprüche 4 bis 6, dadurch gekennzeichnet, daß die radiale Ausdehnung jeder Falte (17, 21) zu dem kugelgelenkschaftseitigen Ende des jeweiligen Rohres (16, 20) hin zunimmt.

8. Verbindung nach einem der Ansprüche 3 bis 7, dadurch gekennzeichnet, daß die endseitigen Innengewinde (2) der Spur- oder Lenkstange als Rechts- und als Linksgewinde ausgebildet sind.

9. Verbindung nach einem der Ansprüche 1 bis 8, dadurch gekennzeichnet, daß die kugelgelenkschaftseitigen Enden jedes Rohres (1, 16, 20) und die offenen Stirnseiten jeder Falte (5, 17, 21) mittels vorgesetzter oder in Rohraufweitungen (11) eingelassener Dichtungen (9, 14) abgedichtet sind.

10. Verbindung nach Anspruch 9, dadurch gekennzeichnet, daß die Dichtungen (9, 14) jeweils mit Laschen (10, 15) in die Falten (5, 17, 21) eingreifen und daß die eingesetzten Schrauben (8) zum Sichern des Kugelgelenkschaftes durch Bohrungen der Laschen (10, 15) hindurchgeführt sind.

**Revendications**

1. Liaison de la tige (3) d'un joint à rotule avec un tube (1, 16, 20), notamment pour des barres de connexion et de direction de véhicules automobiles, dans laquelle la tige (3) de joint à rotule présentant un filetage extérieur (4) est engagée par vissage dans un filetage intérieur (2) du tube (1, 16, 20) et est immobilisée au moyen d'un dispositif de serrage, agissant au niveau du filetage intérieur (2) dans la direction périphérique du tube (1, 16, 20), qui comprend deux saillies radiales du tube (1, 16, 20) dans lesquelles au moins un boulon (8) est engagé pour serrer ensemble les saillies, caractérisée en ce que les saillies sont des parois latérales (6) d'un repli (5, 17, 21) du tube dirigées radialement vers l'extérieur et fermées vers l'extérieur.

2. Liaison suivant la revendication 1, caractérisée en ce que le repli (5, 17, 21) s'étend jusqu'à l'extrémité du tube (1, 16, 20) du côté de la tige du joint à rotule.

3. Liaison suivant la revendication 2, caractérisée en ce que le tube (1) forme, en tant que tube profilé continu, une barre de connexion ou une barre de direction.

4. Liaison suivant l'une des revendications 1 et 2, caractérisée en ce que les tubes (1, 16) sur lesquels un repli (5, 17) est formé sont soudés chacun bout à bout aux extrémités d'une pièce médiane tubulaire (12) avec laquelle ils forment conjointement une barre de connexion ou une barre de direction.

5. Liaison suivant l'une des revendications 1 et 2, caractérisée en ce que les extrémités d'une barre de connexion ou de liaison tubulaire sont réalisées chacune comme un tube (20) sur lequel un repli (21) est formé.

6. Liaison suivant la revendication 5, caractérisée en ce qu'une pièce médiane tubulaire (19) non déformée de la barre de connexion ou de la barre de direction présente un diamètre agrandi par rapport au diamètre de ses extrémités réalisées comme tubes (20) sur lesquels des replis (21) sont formés.

7. Liaison suivant l'une des revendications 4 à 6, caractérisée en ce que l'extension radiale de chaque repli (17, 21) augmente en direction de l'extrémité du côté tige du joint à rotule du tube (16, 20) correspondant.

8. Liaison suivant l'une des revendications 3 à 7, caractérisée en ce que les filetages intérieurs (2) aux extrémités de la barre de connexion ou de la barre de direction sont réalisés comme filetages à pas à droite et à pas à gauche.

9. Liaison suivant l'une des revendications 1 à 8, caractérisée en ce que les extrémités du côté tige du joint à rotule de chaque tube (1, 16, 20) et les faces frontales ouvertes de chaque repli (5, 17, 21) sont rendues étanches au moyen de joints (9, 14) disposés préalablement ou engagés dans des parties évasées (11) du tube.

10. Liaison suivant la revendication 9, caractérisée en ce que les joints (9, 14) s'engagent par des brides (10, 15) dans les replis (5, 17, 21) et en ce que les boulons (8) insérés pour l'immobilisation de la tige de joint à rotule traversent des ouvertures ménagées dans les brides (10, 15).

**Claims**

1. Connection of a ball-joint shank (3) to a tube (1, 16, 20), in particular for track and steering rods of motor vehicles, the ball-joint shank (3) provided with an external thread (4) being screwed into an internal thread (2) of the tube (1, 16, 20) and secured by means of a clamping device acting in the circumferential direction of the tube (1, 16, 20) in the region of the internal thread (2), which has two radial projections of the tube (1, 16, 20) into which at least one bolt (8) for clamping the projections is inserted, characterized in that the projections are side walls (6) of a tube fold (5, 17, 21) which points radially outwards and is closed at the outside.

2. Connection according to Claim 1, characterized in that the fold (5, 17, 21) extends up to the ball-joint-shank end of the tube (1, 16, 20).

3. Connection according to Claim 2, characterized in that the tube (1) forms a track or steering rod as a continuous profiled tube.

4. Connection according to either of Claims 1 and 2, characterized in that the tube (1, 16) with an integrally formed fold (5, 17) are each butt-welded to the ends of a central tube piece (12), with which they jointly form a track or steering rod.

5. Connection according to either of Claims 1 and 2, characterized in that the ends of a tubular track or steering rod are in each case formed as a tube (20) with an integrally formed fold (21).

6. Connection according to Claim 5, characterized in that an undeformed central tube piece (19) of the track or steering rod has a diameter which is enlarged in relation to the diameter of its ends designed as tubes (20) with integrally formed folds (21).

7. Connection according to one of Claims 4 to 6, characterized in that the radial extension of each fold (17, 21) increases towards the ball-joint shank end of the respective tube (16, 20).

8. Connection according to one of Claims 3 to 7, characterized in that the internal threads (2) at the ends of the track or steering rods are designed as a right-handed and as a left-handed thread.

9. Connection according to one of Claims 1 to 8, characterized in that the ball-joint-shank ends of each tube (1, 16, 20) and the open front ends of each fold (5, 17, 21) are sealed by means of seals (9, 14) placed in front or set into widened tube portions (11).

10. Connection according to Claim 9, characterized in that the seals (9, 14) each engage by lugs (10, 15) in the folds (5, 17, 21) and in that the inserted bolts (8) for securing the ball-joint shank are passed through holes in the lugs (10, 15).

## Fig.1

## Fig.2

## Fig.3

## Fig.4

Fig.11

Fig.8

Fig.9

Fig.10

Fig.12

Fig.14

Fig.13

EP 0 315 772 B1